# EUROPÄISCHE PATENTSCHRIFT

(11) **EP 2 858 902 B1**
(45) Veröffentlichungstag und Bekanntmachung des Hinweises auf die Patenterteilung: **03.08.2016**
(21) Anmeldenummer: 13724557.7
(22) Anmeldetag: 15.05.2013
(51) Int. Cl.: B64D 27/24

(54) **VERFAHREN ZUM BEREITSTELLEN EINER VORBESTIMMTEN ANTRIEBSCHARAKTERISTIK IN EINEM FLUGZEUG UND ZUGEHÖRIGE ANTRIEBSVORRICHTUNG**
METHOD FOR PROVIDING PREDEFINED DRIVE CHARACTERISTICS IN AN AIRCRAFT, AND ASSOCIATED DRIVE DEVICE
PROCÉDÉ DE GÉNÉRATION D'UNE CARACTÉRISTIQUE DE PROPLULSION PRÉDÉFINIE DANS UN AVION ET DISPOSITIF DE PROPULSION ASSOCIÉ

(30) Priorität: 12.06.2012 DE 102012209803
(43) Veröffentlichungstag der Anmeldung: 15.04.2015
(73) Patentinhaber: Siemens Aktiengesellschaft, 80333 München (DE)
(72) Erfinder: ANTON, Frank, 91052 Erlangen (DE); GEDIGA, Swen, 91315 Höchstadt/Aisch (DE); WOLLENBERG, Johannes, 82166 Gräfelfing (DE)
(86) Internationale Anmeldenummer: PCT/EP2013/060068
(87) Internationale Veröffentlichungsnummer: WO 2013/186003

(56) Entgegenhaltungen:
- CH-A1- 703 260
- DE-A1- 3 138 376
- US-A1- 2003 230 671
- US-A1- 2008 184 906

## Beschreibung

Die Erfindung betrifft ein Verfahren zum Bereitstellen einer vorbestimmten Soll-Antriebscharakteristik in einem Flugzeug dessen Schuberzeugungselement, also beispielsweise dessen Propeller, durch einen Elektromotor angetrieben wird. Zu der Erfindung gehört auch eine entsprechende elektrische Antriebsvorrichtung zum rotatorischen Antreiben eines Schuberzeugungselements mittels eines Elektromotors. Schließlich gehört zu der Erfindung auch ein Flugzeug, insbesondere ein Starrflügelflugzeug, mit der erfindungsgemäßen Antriebsvorrichtung.

Bei Flugzeugen für den motorisierten Flug erfolgt der Antrieb des Schubelements, also etwa des Propellers oder des Turbofans, heutzutage in der Regel durch eine Verbrennungskraftmaschine. Je nach Bauart und Ausführung weist eine solche Verbrennungskraftmaschine eine spezifische Antriebscharakteristik auf. Diese zeichnet sich zum einen durch die möglichen, einnehmbaren Drehmoment-Drehzahl-Betriebspunkte und zum anderen durch ein spezifisches Ansprechverhalten aus. Die Gesamtheit der von einem bestimmten Antriebsmotor einnehmbaren Drehmoment-Drehzahl-Betriebspunkte definiert ein Drehmoment-Drehzahl-Kennfeld. Das Ansprechverhalten ist die Dynamik des Antriebsmotors, d.h. die zeitliche Veränderung der Drehzahl des Antriebsmotors und/oder die zeitliche Veränderung des vom Antriebsmotors erzeugten Drehmoments beim Betätigen des Schubhebels, d.h. bei gegebener Ausgangsstellung des Schubhebels und gleicher Last weisen unterschiedliche Verbrennungskraftmaschinen unterschiedliche zeitliche Verläufe von Drehmoment und Drehzahl sowohl beim Beschleunigen als auch beim Verzögern auf. Manche Verbrennungskraftmaschinen reagieren eher träge auf eine Leistungsanforderung, andere eher unmittelbar (unterschiedliches Ansprechverhalten).

Bei der heutigen Pilotenausbildung trainiert der Pilotenschüler mit einem Trainingsflugzeug, das eine bestimmte Verbrennungskraftmaschine als Antrieb aufweist. Der Pilotenschüler gewöhnt sich somit an die Antriebscharakteristik dieser Verbrennungskraftmaschine. Allerdings ist es ein wichtiger Bestandteil der Pilotenausbildung, dass ein Pilot auch einzuschätzen lernt, wie sich das von ihm geführte Flugzeug bei unterschiedlichen Manövern verhält. Muss ein Pilot beispielsweise einen Landeanflug abbrechen und deshalb das Flugzeug über der Landepiste noch einmal durchstarten, so ist hierbei entscheidend, dass der Pilot das Ansprechverhalten der Verbrennungskraftmaschine richtig einschätzt, um nicht in Gefahr zu geraten. Genauso muss ein Pilot einschätzen können, welchen Betriebspunkt eine Verbrennungskraftmaschine einnimmt, wenn er den Schubhebel auf eine bestimmte Stellung einstellt.

Daher ist es in der Regel Bestandteil der Pilotenausbildung, den Pilotenschüler zum Abschluss der Pilotenausbildung nicht nur sein Trainingsflugzeug, sondern auch ein Flugzeug desjenigen Typs fliegen zu lassen, das der Pilotenschüler in Zukunft zu fliegen beabsichtigt. Das Antriebsverhalten dieses Zielflugzeugs, auf das der Flugschüler hin ausgebildet werden soll, kann mit dem Trainingsflugzeug aber nicht nachgebildet werden, da das Trainingsflugzeug in der Regel eine andere Verbrennungskraftmaschine aufweist als das Zielflugzeug.

Bisher muss akzeptiert werden, dass das Trainingsflugzeug eine andere Antriebscharakteristik als das Zielflugzeug aufweist. Dies hat zur Folge, dass ein weiteres Training auf dem Zielflugzeug absolviert werden muss. Bei großen Zielflugzeugen bedeutet dies höheren Kraftstoffverbrauch und damit verbunden auch eine höhere Umweltbelastung. Das Zielflugzeug muss zudem zu Trainingszwecken zur Verfügung stehen, und es muss die dafür erforderliche Infrastruktur vorhanden sein.

In dem Dokument US 2003/0230671 A1 ist ein Propellerflugzeug mit einem Brennstoffzellenantrieb beschrieben. Das Flugzeug weist eine Steuereinrichtung auf, mittels welcher die Ge schwindigkeit und Leistung des Antriebsmotors nach Bedarf eingestellt werden können. Zum Versorgen des Antriebsmotors weist das Flugzeug unterschiedliche Energiespeicher auf, mit denen auch ein Boost-Betrieb für einen Steigflug des Flugzeugs realisiert wird.

Eine Aufgabe der vorliegenden Erfindung ist es, die Eigenschaften verschiedener Turbinen-, Turboprop- und Kolbenmotor-Antriebe für einen Flugschüler einfacher erlern- und trainierbar zu machen.

Die Aufgabe wird durch ein Verfahren gemäß Patentanspruch 1, eine Antriebsvorrichtung gemäß Patentanspruch 4 sowie ein Flugzeug gemäß Patentanspruch 13 gelöst. Vorteilhafte Weiterbildungen der Erfindungen sind durch die Unteransprüche gegeben.

Durch die Erfindung ist es ermöglicht, dass mit einem einzigen Trainingsflugzeug mehrere Zielflugzeuge hinsichtlich ihres Antriebsverhaltens simuliert werden können. Hierzu ermöglicht das erfindungsgemäße Verfahren, in einem Flugzeug eine vorbestimmte Soll-Antriebscharakteristik bereitzustellen, wie sie auch bei dem Zielflugzeug zu erwarten ist, für welches ein Pilotenschüler ausgebildet werden soll. Die Soll-Antriebscharakteristik kann hierbei ein Drehzahl-Drehmoment-Kennfeld oder Angaben zu einem Ansprechverhalten oder beides umfassen. Das erfindungsgemäße Verfahren sieht hierzu vor, ein Schuberzeugungselement des Flugzeugs durch einen Elektromotor anzutreiben, der eine Ist-Antriebscharakteristik aufweist, welche die Soll-Antriebscharakteristik zumindest teilweise mitbeinhaltet. Identisch ist die Ist-Antriebscharakteristik dagegen gegenüber der Soll-Antriebscharakteristik in der Regel nicht, sondern vielmehr ist die Ist-Antriebscharakteristik teilweise von der Soll-Antriebscharakteristik verschieden, weil etwa mit dem Elektromotor eine Drehmoment-Drehzahl-Kombination einstellbar ist, die nicht in der Soll-Antriebscharakteristik vorkommt, oder weil der Elektromotor eine größere Dynamik aufweist als es durch die Soll-Antriebscharakteristik vorgegeben ist.

Deshalb umfasst das erfindungsgemäße Verfahren einen zweiten Schritt, gemäß welchem Betriebspunkte des Elektromotors durch eine Steuereinrichtung ausschließlich gemäß der Soll-Antriebscharakteristik eingestellt werden. Mit anderen Worten wird im Betrieb des Elektromotors dessen Ist-Antriebscharakteristik soweit eingeschränkt, dass sich der Elektromotor aus Sicht des Pilotenschülers verhält, wie ein völlig anderer Motor mit einem Drehmoment-Drehzahl-Kennfeld und/oder einem Ansprechverhalten, wie es durch die Soll-Antriebscharakteristik vorgegeben ist.

Durch das erfindungsgemäße Verfahren ist in vorteilhafter Weise ein Flugtraining für ein Zielflugzeug mittels eines anderen Trainingsflugzeugs durchführbar. Das Flugtraining auf dem Zielflugzeug kann somit durch entsprechendes Training auf dem Trainingsflugzeug ersetzt werden, indem die Antriebscharakteristik des Trainingsflugzeugs auf die Soll-Antriebscharakteristik eingestellt wird. Bei großen Zielflugzeugen bedeutet das weniger Kraftstoffverbrauch und damit verbunden weniger Umweltbelastung. Es müssen auch nicht mehr so viele Zielflugzeuge sowie die hierfür erforderliche Infrastruktur für das Training zur Verfügung gestellt werden.

Die erfindungsgemäße Antriebsvorrichtung ermöglicht das Durchführen des erfindungsgemäßen Verfahrens. Die Antriebsvorrichtung weist hierzu ein Schuberzeugungselement zur Schubkrafterzeugung auf, welches insbesondere einen freifahrenden Propeller oder einen Mantelpropeller (Turbofan) umfasst. Des Weiteren ist ein Elektromotor zum rotatorischen Antreiben des Schuberzeugungselements bereitgestellt. Eine Steuereinrichtung ist zum Einstellen eines Betriebspunktes des Elektromotors ausgebildet. Bei der Steuereinrichtung kann es sich beispielsweise um einen Umrichter und ein zugehöriges Steuergerät handeln, wobei durch den Umrichter aus einer Versorgungs-Gleichspannung ein Drehstrom für den Elektromotor erzeugt wird, wobei die Wechselfrequenz in Abhängigkeit von Steuersignalen des Steuergeräts eingestellt wird.

Schließlich umfasst die erfindungsgemäße Antriebsvorrichtung noch eine Bedieneinrichtung zum Auswählen eines Betriebspunktes durch einen Piloten. Die Bedieneinrichtung umfasst insbesondere einen Schubhebel. Erfindungsgemäß ist die Steuereinrichtung nun dazu ausgelegt, auf der Grundlage einer Ist-Antriebscharakteristik des Elektromotors eine vorgegebene Soll-Antriebscharakteristik (also etwa diejenige eines bestimmten Zielflugzeugs) nachzubilden und hierzu bei einer Betätigung der Bedieneinrichtung einen Betriebspunkt ausschließlich gemäß der Soll-Antriebscharakteristik einzustellen.

In der Steuereinrichtung ist eine Mehrzahl von Soll-Antriebscharakteristiken gespeichert. Entsprechend ist die Steuereinrichtung dann dazu ausgelegt, in Abhängigkeit von einer Betätigung einer Auswahleinrichtung, die Bestandteil der Steuereinrichtung sein kann, zwischen den Soll-Antriebscharakteristiken umzuschalten. Hierdurch ist es dann möglich, mehrere unterschiedliche Zielflugzeuge mit unterschiedlicher Antriebscharakteristik mit einem einzigen Trainingsflugzeug nachzubilden.

Das Einstellen von Betriebspunkten gemäß der Soll-Antriebscharakteristik kann hierbei zwei Aspekte umfassen, nämlich die Frage, welche Betriebspunkte (Drehmoment-Drehzahl-Kombination) eingestellt werden können und die Frage, mit welcher Dynamik zwischen einem aktuellen Betriebspunkt zu einem neuen Betriebspunkt gewechselt wird.

Eine Weiterbildung des erfindungsgemäßen Verfahrens sieht in diesem Zusammenhang vor, dass durch die beiden Antriebscharakteristiken, also die Ist-Antriebscharakteristik und die Soll-Antriebscharakteristik, jeweils eine Mehrzahl von einstellbaren Betriebspunkten definiert ist, von denen jeder eine Kombination aus einem Drehzahl-Wert und einem DrehmomentWert darstellt. Diese Weiterbildung des erfindungsgemäßen Verfahrens sieht vor, durch die Steuereinrichtung nur Betriebspunkte einzustellen, die beiden Antriebscharakteristiken gemeinsam sind. Mit anderen Worten ist durch die vorgegebene Soll-Antriebscharakteristik eine Untermenge der insgesamt von dem Elektromotor einnehmbaren Betriebspunkte vorgegeben, auf die dann auch der Betrieb des Elektromotors durch die Steuereinrichtung begrenzt wird. Vorteilhaft ist bei dieser Weiterbildung des Verfahrens, dass ein Pilot lernt, das Flugzeug mit der begrenzten Menge an möglichen Betriebspunkten zu führen.

Zweckmäßigerweise ist hierzu bei der erfindungsgemäßen Antriebsvorrichtung ein Drehmoment-Drehzahl-Kennfeld in der Steuereinrichtung gespeichert. Das Kennfeld kann aus einer Mehrzahl von Drehmoment-Drehzahl-Wertepaaren für die möglichen, einnehmbaren Betriebspunkte gebildet sein. Das Kennfeld kann aber auch durch parametrische mathematische Funktionen beschrieben sein. Die Steuereinrichtung ist des Weiteren zweckmäßigerweise dazu ausgelegt, in Abhängigkeit von einer Stellung der Bedieneinrichtung, also etwa eines Schubhebels, einen Betriebspunkt aus dem Drehmoment-Drehzahl-Kennfeld auszuwählen und diesen bei dem Elektromotor in der an sich bekannten Weise einzustellen.

Eine andere Weiterbildung des Verfahrens sieht vor, dass durch die beiden Antriebscharakteristiken jeweils eine Antriebsdynamik definiert ist, durch welche sich eine bestimmte zeitliche Veränderung eines Drehmoments und/oder einer Drehzahl des Elektromotors beim Wechseln von einem aktuellen Betriebspunkt zu einem neuen Betriebspunkt ergibt. Diese Weiterbildung des Verfahrens sieht des Weiteren vor, dass der Elektromotor durch die Steuereinrichtung ausschließlich mit einer solchen Antriebsdynamik betrieben wird, die durch die Soll-Antriebscharakteristik vorgegeben ist. Natürlich geschieht dies im Rahmen der durch die Ist- Antriebscharakteristik tatsächlich realisierbaren Antriebsdynamik des Elektromotors. Diese Weiterbildung des Verfahrens weist den Vorteil auf, dass der Pilot lernt, das Ansprechverhalten unterschiedlicher Zielflugzeuge einzuschätzen.

Zweckmäßigerweise sind hierzu bei der erfindungsgemäßen Antriebsvorrichtung in der Steuereinrichtung Daten zu einer Antriebsdynamik gespeichert, wobei dann die Steuereinrichtung dazu ausgelegt ist, bei einer Betätigung der Bedieneinrichtung ein Drehmoment und/oder eine Drehzahl des Elektromotors in Abhängigkeit von den Daten mit der Zeit zu verändern. Bei den Daten kann es sich um punktweise definierte Kennlinien oder um parametrische mathematische Funktionen handeln, wobei als Beschreibung der Antriebsdynamik durch die Daten festgelegt wird, wie ausgehend von einem bestimmten Betriebspunkt bei Veränderung der Stellung eines Bedienelements der Bedieneinrichtung das Drehmoment und/oder die Drehzahl mit der Zeit zu- bzw. abnimmt.

Die vorgegebene Soll-Antriebscharakteristik umfasst bevorzugt ein Drehmoment-Drehzahl-Kennfeld eines bestimmten Motortyps, bevorzugt einer Verbrennungskraftmaschine, insbesondere eines Kolbenmotorantriebs, eines Turbinenantriebs oder eines Turbopropantriebs. Die Antriebscharakteristiken solcher Verbrennungskraftmaschinen umfassen in der Regel weniger Betriebspunkte bzw. eine geringere Dynamik als die Antriebscharakteristik eines Elektromotors. Somit ist es mit der erfindungsgemäßen Antriebsvorrichtung also möglich, die Soll-Antriebscharakteristik solcher Motoren vollumfänglich nachzubilden.

Der Elektromotor ist bevorzugt Bestandteil einer seriell-hybriden Antriebseinrichtung. Bei einer solchen Antriebseinrichtung wird die elektrische Energie für den Betrieb des Elektromotors durch einen Verbrennungsmotor bereitgestellt, der einen Generator antreibt. Optional kann noch eine Versorgung über eine Batterie oder ein Brennstoffzellensystem vorgesehen sein. Die vom Generator und gegebenenfalls der Batterie bzw. das Brennstoffzellensystem bereitgestellte elektrische Spannung wird als gleichgerichtete Spannung bzw. als Gleichspannung in einem Zwischenkreis bereitgestellt, an den auch ein Umrichter zum Betreiben des Elektromotors angeschlossen ist. Ein seriell-hybrider Antrieb hat den Vorteil, dass der Verbrennungsmotor mit einem optimalen Wirkungsgrad beim Erzeugen der elektrischen Energie betrieben und völlig unabhängig davon der Betriebspunkt des Elektromotors gewählt werden kann.

Eine alternative Ausführungsform der Antriebsvorrichtung sieht vor, dass der Elektromotor Bestandteil einer parallel-hybriden Antriebseinrichtung ist. Bei dieser ist ein Verbrennungsmotor mechanisch, z.B. über eine Welle, mit dem Schuberzeugungselement, also etwa einem Propeller, gekoppelt. Der Elektromotor ist dann auf der Antriebswelle des Verbrennungsmotors angeordnet oder mit dieser über einen Riemen gekoppelt und kann hierdurch ein zusätzliches Drehmoment für den Antrieb des Schuberzeugungselements erzeugen. Vorteil dieser Ausführungsform ist, dass der Elektromotor mit geringem Entwicklungsaufwand in ein bereits bestehendes Antriebssystem eines Trainingsflugzeugs integriert werden kann.

Wie bereits ausgeführt, umfasst die Erfindung auch ein Flugzeug. Dieses weist eine Ausführungsform der erfindungsgemäßen Antriebsvorrichtung auf.

Im Folgenden wird die Erfindung noch einmal genauer anhand eines konkreten Ausführungsbeispiels erläutert. Es zeigt:
- FIG 1: eine schematische Darstellung einer bevorzugten Ausführungsform der erfindungsgemäßen Antriebsvorrichtung und
- FIG 2: ein Diagramm mit schematisierten Verläufen von Antriebscharakteristiken.

Bei dem im Folgenden erläuterten Beispiel stellen die beschriebenen Komponenten der Antriebsvorrichtung jeweils einzelne, unabhängig voneinander zu betrachtende Merkmale der Erfindung dar, welche die Erfindung auch jeweils unabhängig voneinander weiterbilden und damit auch einzeln oder in einer anderen als der gezeigten Kombination als Bestandteil der Erfindung anzusehen sind. Des Weiteren ist die beschriebene Ausführungsform auch durch weitere der bereits beschriebenen Merkmale ergänzbar.

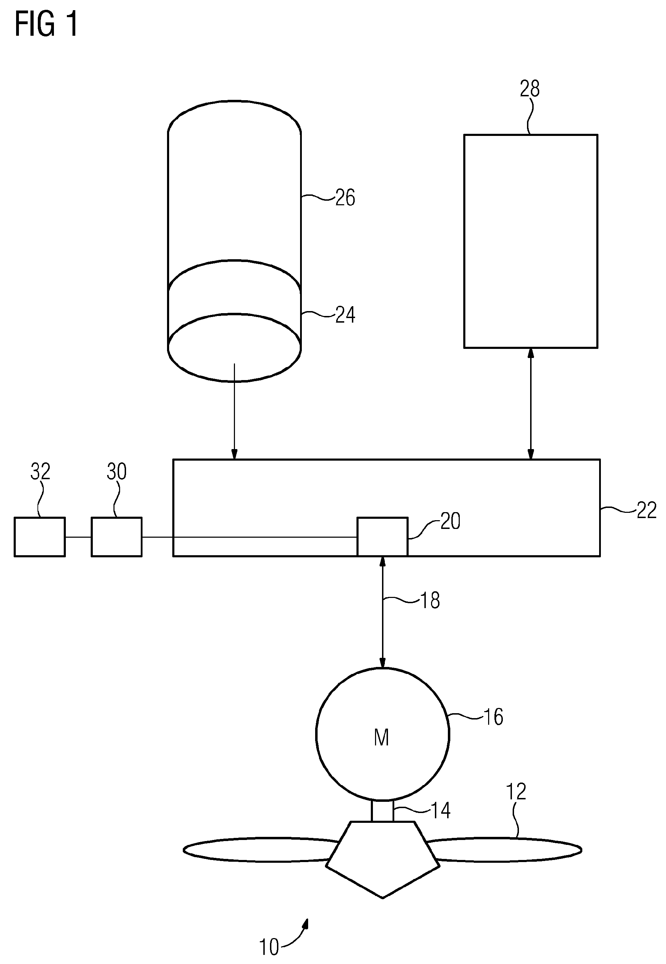

In FIG 1 ist eine Antriebsvorrichtung 10 eines Flugzeugs, beispielsweise eines Leichtflugzeugs, gezeigt. Ein Propeller 12 zum Erzeugen des Schubs für einen Flug des Flugzeugs wird über eine Welle 14 von einem Elektromotor 16 gedreht. Bei dem Elektromotor 16 kann es sich beispielsweise um eine Synchronmaschine, insbesondere eine permanentmagneterregte Synchronmaschine, handeln. Der Elektromotor 16 wird über ein Kabel 18 mit einem mehrphasigen Drehstrom in an sich bekannter Weise angetrieben. Das Kabel 18 ist an einen steuerbaren Umrichter 20 eines Zwischenkreises 22 angeschlossen. Durch den Umrichter 20 wird eine zwischen elektrischen Leitungen des Zwischenkreises 22 anliegende gleichgerichtete elektrische Spannung in die mehrphasige Wechselspannung in ebenfalls an sich bekannter Weise umgewandelt. Die gleichgerichtete Spannung wird von einem Generator 24 erzeugt, welcher diese in den Zwischenkreis 22 über einen Gleichrichter einspeist. Der Generator 24 wird von einer Verbrennungskraftmaschine 26 angetrieben. An den Zwischenkreis 22 ist zusätzlich eine Batterie 28 angeschlossen, die mit elektrischer Energie aus dem Generator 24 über den Zwischenkreis 22 aufgeladen werden kann. Die Batterie 28 ist dazu ausgelegt, den Elektromotor 16 bei einem Start des Flugzeugs mit zusätzlicher elektrischer Energie zu versorgen. Insgesamt stellt die Antriebsvorrichtung 10 ein seriell-hybrides Antriebssystem dar. Anstelle der Batterie 28 oder zusätzlich hierzu kann ein Brennstoffzellensystem als weitere Energiequelle bereitgestellt sein.

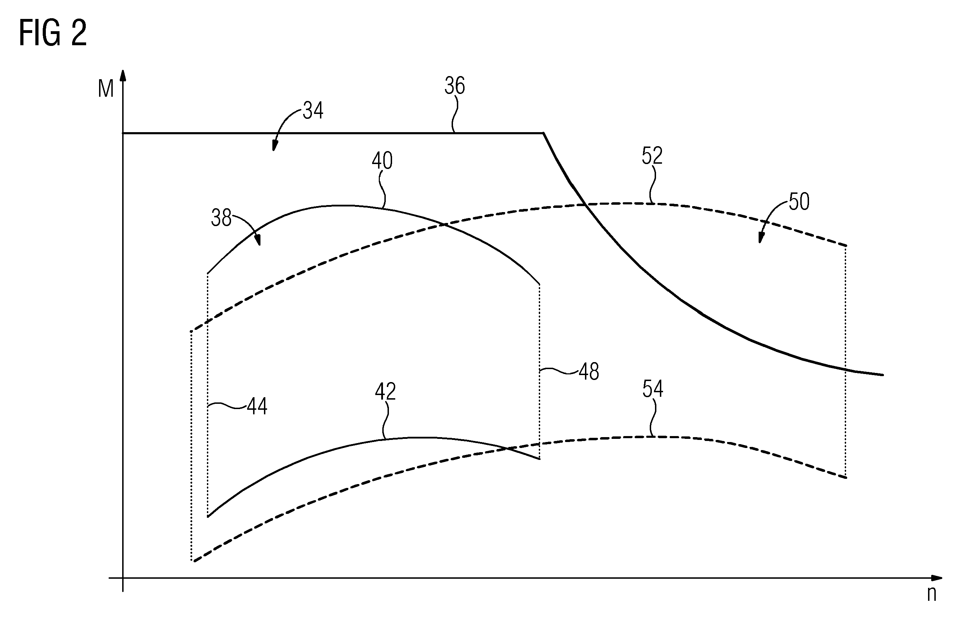

Anstelle der in FIG 2 gezeigten direkten Kopplung des Elektromotors 16 mit dem Propeller 12 über die Welle 14 kann der Elektromotor 16 auch über ein Getriebe mit dem Propeller 12 gekoppelt sein. Dies ist generell bei allen Ausführungsformen der erfindungsgemäßen Antriebsvorrichtung möglich. Durch ein Getriebe ergibt sich der Vorteil, dass eine bestimmte Schubleistung, die der Propeller 12 erzeugen soll, mit dem Elektromotor 16 bei einer Kombination aus Drehmoment und Drehzahl bereitgestellt werden kann, die sich von der Drehmoment-Drehzahl-Kombination des Propellers 12 unterscheidet. Dies kann Vorteile in Bezug auf Verschleiß und Wirkungsgrad des Elektromotors bringen. Auch der Verbrennungsmotor 26 kann über ein Getriebe mit dem Generator 24 mechanisch gekoppelt sein. Auch dies ist bei allen Ausführungsformen der erfindungsgemäßen Antriebsvorrichtung möglich.

Die Antriebscharakteristik des Elektromotors 16 weist ein größeres Feld möglicher Betriebspunkte (Drehmoment-Drehzahl-Kombinationen) auf als ein vergleichbarer Verbrennungsmotor, wie er in einem herkömmlichen Flugzeug für einen rotatorischen Antrieb der Welle 14 und damit des Propellers 12 verwendet wird. Auch spricht der Elektromotors 16 schneller an, d.h. seine Dynamik ist größer als diejenige einer vergleichbaren typischen Verbrennungskraftmaschine für ein Flugzeug des hier beschriebenen Typs.

Über ein elektronisches Steuergerät 30 des Elektromotors 16 ist bei der Antriebsvorrichtung 10 durch eine entsprechende Programmierung das Steuern des Umrichters 20 derart konfiguriert, dass entweder nur das Ansprechverhalten oder nur das Drehmoment-Drehzahl-Kennfeld oder auch beides zusammen von unterschiedlichen Typen von Verbrennungskraftmaschinen durch die Antriebsvorrichtung 10 nachgestellt wird. Entsprechende Daten zu diesen unterschiedlichen Soll-Antriebscharakteristiken sind in dem vorliegenden Beispiel in dem Steuergerät 30 gespeichert. Der Pilot des Flugzeugs kann die gewünschte, durch das Steuergerät 30 nachzubildende Soll-Antriebscharakteristik über eine Bedieneinrichtung 32, beispielsweise über ein Auswahlmenü auf einem Bildschirm im Cockpit oder über einen Wahlschalter, wählen. Entsprechend der Auswahl werden Werte für Steuerparameter der Regelung des Elektromotors 16 in dem Steuergerät 30 eingestellt. Die elektrische Antriebsvorrichtung 10 reagiert dann auf eine Schubhebelbewegung und Schubhebelstellung eines im Cockpit befindlichen, vom Pilot bedienten Schubhebels genauso wie es die nachzubildende Verbrennungskraftmaschine und/oder das gesamte nachzubildende Zielflugzeug mit der gewählten Soll-Antriebscharakteristik täte. Der Pilot bekommt dadurch ein Gefühl für das Zielflugzeug, noch bevor er es das erste Mal geflogen hat.

Zur Verdeutlichung des Steuerungsverfahrens ist in FIG 2 ein Vergleich eines Drehmoment-Drehzahl-Kennfeldes 34 der elektrischen Maschine 16 dargestellt. Durch das Kennfeld 34 ist angegeben, welches Drehmoment M der Elektromotor 16 bei welcher Drehzahl n erzeugen kann. Das Kennfeld 34 des Elektromotors 16 zeigt an, dass jeder beliebige Betriebspunkt (M-n-Kombination) zwischen dem Wert M = 0 und einem drehzahlabhängigen Maximalwert, der durch die Begrenzungslinie 36 definiert ist, eingestellt werden kann. Im Vergleich hierzu ist in FIG 2 auch ein Kennfeld 38 einer Verbrennungskraftmaschine dargestellt, das durch eine Volllastkennlinie 40 nach oben hin begrenzt ist. Die Volllastkennlinie ergibt sich bei vollständig geöffneter Drosselklappe der Verbrennungskraftmaschine. Das Kennfeld 38 ist zu niedrigen Drehmomenten durch eine untere Kennlinie 42 gebildet, die nicht unterschritten werden kann, da ansonsten die Drosselklappe so weit geschlossen werden müsste, dass die Verbrennungskraftmaschine stoppt. Weitere Begrenzungen bildet eine Mindestdrehzahl 44 und eine Höchstdrehzahl 48. Die durch das Kennfeld 38 definierte Soll-Antriebscharakteristik der Verbrennungskraftmaschine ist vollständig von dem Kennfeld 34 umfasst, d.h. darin beinhaltet. Somit kann mittels der Antriebsvorrichtung 10 das Verhalten einer Verbrennungskraftmaschine mit dem Kennfeld 38 vollständig nachgebildet werden. Hierzu werden durch das Steuergerät 30 ausschließlich die Betriebspunkte (M-n-Kombinationen) im Betrieb des Elektromotors 16 eingestellt, die durch das Kennfeld 38 vorgegeben sind.

Für eine Realisierung der Erfindung ist es nicht notwendig, dass ein Kennfeld, das durch eine Soll-Antriebscharakteristik vorgegeben ist, vollständig von dem Kennfeld 34 des Elektromotors umfasst ist. Für das Trainieren bestimmter Flugmanöver kann es ausreichend sein, wenn mittels der Antriebsvorrichtung 10 ausschließlich die für das Training nötigen Betriebspunkte nachgestellt werden können. Hierzu ist in FIG 2 ein weiteres Kennfeld 50 gezeigt, das in ähnlicher Weise wie das Kennfeld 38 durch Betriebspunkte definiert ist, die zwischen einer oberen Kennlinie 52 und einer unteren Kennlinie 54 liegen. Wie FIG 2 zeigt, können durch die Antriebseinrichtung 10 all diejenigen Betriebspunkte der durch das Kennfeld 50 beschriebenen Verbrennungskraftmaschine durch die Antriebsvorrichtung 10 nachgestellt werden, die den Kennfeldern 50 und 34 gemeinsam sind.

In vergleichbarer Weise, wie es anhand von FIG 2 mit den Betriebspunkten veranschaulicht ist, kann auch die Dynamik einer Verbrennungskraftmaschine mittels der Antriebsvorrichtung 10 nachgestellt werden.

Der Nutzen für die Pilotenausbildung bei einem Trainingsflugzeug, welches mit einem elektrischen Propellerantrieb und einer entsprechend programmierten Antriebssteuerung ausgerüstet ist, liegt darin, dass die Eigenschaften verschiedener Turbinen-, Turboprop- und Kolbenmotor-Antriebe erlern- und trainierbar sind.

## Patentansprüche

1. Verfahren zum Bereitstellen einer vorgegebenen Soll-Antriebscharakteristik (38,50) in einem Flugzeug, wobei die Soll-Antriebscharakteristik ein Drehzahl-Drehmoment-Kennfeld und/oder Angaben zu einem Ansprechverhalten umfasst, **dadurch gekennzeichnet, dass** ein Schuberzeugungselement (12) des Flugzeugs durch einen Elektromotor (16), der eine Ist-Antriebscharakteristik (34) aufweist, welche die Soll-Antriebscharakteristik (38,50) zumindest teilweise mit beinhaltet, aber von dieser auch teilweise verschieden ist, angetrieben wird und bei einer Betätigung einer Bedieneinrichtung des Flugzeugs Betriebspunkte des Elektromotors (16) durch eine Steuereinrichtung (30) ausschließlich gemäß der Soll-Antriebscharakteristik (38, 50) eingestellt werden, und in der Steuereinrichtung (30) eine Mehrzahl von Soll-Antriebscharakteristiken (38,50) gespeichert ist und zwischen den Soll-Antriebscharakteristiken (38,50) durch die Steuereinrichtung (30) in Abhängigkeit von einer Betätigung einer Auswahleinrichtung (32) der Steuereinrichtung (30) umgeschaltet wird.

2. Verfahren nach Anspruch 1, wobei durch die Antriebscharakteristiken (34,38 bzw. 34,50) jeweils eine Mehrzahl von einstellbaren Betriebspunkten festgelegt ist, von denen jeder durch eine Kombination aus einem Drehzahlwert (n) und einem Drehmomentwert (M) definiert ist, **dadurch gekennzeichnet, dass** durch die Steuereinrichtung (30) nur Betriebspunkte eingestellt werden, die beiden Antriebscharakteristiken (34,38 bzw. 34,50) gemeinsam sind.

3. Verfahren nach Anspruch 1 oder 2, wobei durch die beiden Antriebscharakteristiken jeweils eine Antriebsdynamik festgelegt ist, durch welche eine zeitliche Veränderung eines Drehmoments und/oder einer Drehzahl des Elektromotors (16) beim Wechseln von einem aktuellen Betriebspunkt zu einem neuen Betriebspunkt beschrieben ist, **dadurch gekennzeichnet, dass** der Elektromotor (16) durch die Steuereinrichtung (30) ausschließlich mit einer Antriebsdynamik betrieben wird, die durch die Soll-Antriebscharakteristik vorgegebenen ist.

4. Antriebsvorrichtung (10) für ein Flugzeug, mit
- einem Schuberzeugungselement (12) zur Schubkrafterzeugung,
- einem Elektromotor (16) zum rotatorischen Antreiben des Schuberzeugungselements (12),
- einer Steuereinrichtung (30) zum Einstellen eines Betriebspunktes des Elektromotors (16) und
- einer Bedieneinrichtung zum Auswählen eines Betriebspunktes durch einen Piloten,
**dadurch gekennzeichnet, dass** die Steuereinrichtung (30) dazu ausgelegt ist, auf der Grundlage einer Ist-Antriebscharakteristik (34) des Elektromotors (16) eine vorgegebene Soll-Antriebscharakteristik (38,50) nachzubilden und hierzu bei einer Betätigung der Bedieneinrichtung einen Betriebspunkt ausschließlich gemäß der Soll-Antriebscharakteristik (38,50) einzustellen, wobei in der Steuereinrichtung (30) eine Mehrzahl von Soll-Antriebscharakteristiken (38,50) gespeichert ist und die Steuereinrichtung (30) dazu ausgelegt ist, in Abhängigkeit von einer Betätigung einer Auswahleinrichtung (32) der Steuereinrichtung (30) zwischen den Soll-Antriebscharakteristiken (38,50) umzuschalten.

5. Antriebsvorrichtung (10) nach Anspruch 4, **dadurch gekennzeichnet, dass** die Soll-Antriebscharakteristik ein Drehmoment-Drehzahl-Kennfeld (38,50) umfasst, welches in der Steuereinrichtung (30) gespeichert ist und die Steuereinrichtung (30) dazu ausgelegt ist, in Abhängigkeit von einer Stellung der Bedieneinrichtung einen Betriebspunkt aus dem Drehmoment- Drehzahl-Kennfeld (38,50) auszuwählen und diesen einzustellen.

6. Antriebsvorrichtung (10) nach Anspruch 4 oder 5, **dadurch gekennzeichnet, dass** die Soll-Antriebscharakteristik Daten zu einer Antriebsdynamik umfasst, die in der Steuereinrichtung (30) gespeichert sind, und die Steuereinrichtung (30) dazu ausgelegt ist, bei einer Betätigung der Bedieneinrichtung ein Drehmoment und/oder eine Drehzahl des Elektromotors (16) in Abhängigkeit von den Daten mit der Zeit zu verändern.

7. Antriebsvorrichtung (10) nach einem der Ansprüche 4 bis 6, **dadurch gekennzeichnet, dass** die Soll-Antriebscharakteristik ein Drehmoment-Drehzahl-Kennfeld (38,50) eines vorbestimmten Motortyps umfasst.

8. Antriebsvorrichtung nach Anspruch 7, wobei der vorbestimmte Motortyp derjenige einer Verbrennungskraftmaschine ist.

9. Antriebsvorrichtung (10) nach einem der Ansprüche 4 bis 8, **dadurch gekennzeichnet, dass** das Schuberzeugungselement (12) ein Propeller, einen Turbofan oder einen Turboprop umfasst.

10. Antriebsvorrichtung (10) nach einem der Ansprüche 4 bis 9, **dadurch gekennzeichnet, dass** die Bedieneinrichtung einen Schubhebel umfasst.

11. Antriebsvorrichtung (10) nach einem der Ansprüche 4 bis 10, **dadurch gekennzeichnet, dass** der Elektromotor (16) Bestandteil einer seriell-hybriden Antriebseinrichtung (10) ist.

12. Antriebsvorrichtung nach einem der Ansprüche 4 bis 10, **dadurch gekennzeichnet, dass** der Elektromotor Bestandteil einer parallel-hybriden Antriebseinrichtung ist.

13. Flugzeug mit einer Antriebsvorrichtung (10) gemäß einem der Ansprüche 4 bis 12.

## Claims

1. Method for providing predefined nominal drive characteristics (38,50) in an aircraft, wherein the nominal drive characteristics comprise a torque/speed map and/or information concerning a response behaviour, **characterised in that** a thrust generating element (12) of the aircraft is driven by an electric motor (16) having actual drive characteristics (34) which at least partially include the nominal drive characteristics (38,50) but are also partially different therefrom, and, when the operator device of the aircraft is actuated, operating points of the electric motor (16) are set by a control device (30) solely according to the nominal drive characteristics (38,50), and a plurality of nominal drive characteristics (38,50) are stored in the control device (30) and the control device (30) switches between the nominal drive characteristics (38,50) depending on how a selector device (32) of the control device (30) is actuated.

2. Method according to claim 1, wherein a plurality of settable operating points, each defined by a combination of a speed value (n) and a torque value (M), are determined by the drive characteristics (34,38 / 34,50) in each case, **characterised in that** only operating points having the two drive characteristics (34,38 / 34,50) in common are set by the control device (30).

3. Method according to claim 1 or 2, wherein drive dynamics describing a change over time of a torque and/or of a speed of the electric motor (16) when changing from a current operating point to a new operating point are defined by the two drive characteristics, **characterised in that** the electric motor (16) is operated by the control device (30) solely using drive dynamics predefined by the nominal drive characteristics in each case.

4. Drive device (10) for an aircraft, comprising
- a thrust generating element (12) for producing propulsive force,
- an electric motor (16) for rotationally driving the thrust generating element (12),
- a control device (30) for setting an operating point of the electric motor (16) and
- an operator device for operating point selection by a pilot,
**characterised in that** the control device (30) is designed to simulate predefined nominal drive characteristics (38,50) on the basis of actual drive characteristics (34) of the electric motor (16) and, for this purpose, to set an operating point solely according to the nominal drive characteristics (38,50) when the operator device is actuated, wherein a plurality of nominal drive characteristics (38,50) are stored in the control device (30) and the control device (30) is designed to switch between the nominal drive characteristics (38,50) depending on how a selector device (32) of the control device (30) is actuated.

5. Drive device (10) according to claim 4, **characterised in that** the nominal drive characteristics comprise a torque/speed map (38,50) which is stored in the control device (30) and the control device (30) is designed to select and set an operating point from the torque/speed map (38,50) depending on an operator device position.

6. Drive device (10) according to claim 4 or 5, **characterised in that** the nominal drive characteristics include drive dynamics data which is stored in the control device (30), and the control device (30) is designed to change a torque and/or a speed of the electric motor (16) over time as a function of the data when the operator device is actuated.

7. Drive device (10) according to one of claims 4 to 6, **characterised in that** the nominal drive characteristics comprise a torque/speed map (38,50) of a predefined engine type.

8. Drive device (10) according to claim 7, wherein the predefined engine type is that of an internal combustion engine..

9. Drive device (10) according to one of claims 4 to 8, **characterised in that** the thrust generating element (12) comprises a propeller, a turbofan or a turboprop.

10. Drive device (10) according to one of claims 4 to 9, **characterised in that** the operator device is a thrust lever.

11. Drive device (10) according to one of claims 4 to 10, **characterised in that** the electric motor (16) is part of a serial-hybrid drive device (10).

12. Drive device according to one of claims 4 to 10, **characterised in that** the electric motor is part of a parallel-hybrid drive device.

13. Aircraft having a drive device (10) according to one of claims 4 to 12.

## Revendications

1. Procédé pour fournir une caractéristique de propulsion théorique prédéfinie (38,50) dans un avion, la caractéristique de propulsion théorique comprenant un champ caractéristique vitesse-couple et/ou des indications sur un mode de réponse, **caractérisé en ce qu'**un élément générateur de poussée (12) de l'avion est entraîné par un moteur électrique (16) lequel présente une caractéristique de propulsion réelle (34) qui inclut au moins partiellement la caractéristique de propulsion théorique (38,50) mais est aussi partiellement différente de celle-ci et qu'en actionnant un dispositif de manoeuvre de l'avion, des points de fonctionnement du moteur électrique (16) sont réglés par un dispositif de commande (30) exclusivement selon la caractéristique de propulsion théorique (38,50), et **en ce qu'**une pluralité de caractéristiques de propulsion théoriques (38,50) est stockée dans le dispositif de commande (30) et que le dispositif de commande (30) commute entre les caractéristiques de propulsion théoriques (38, 50) en fonction d'un actionnement d'un dispositif de sélection (32) du dispositif de commande (30).

2. Procédé selon la revendication 1, les caractéristiques de propulsion (34, 38 resp. 34, 50) fixant chacune une pluralité de points de fonctionnement réglables dont chacun est défini par une combinaison d'une valeur de vitesse (n) et d'une valeur de couple (M), **caractérisé en ce que** le dispositif de commande (30) ne règle que les points de fonctionnement qui sont communs aux deux caractéristiques de propulsion (34, 38 resp. 34, 50).

3. Procédé selon la revendication 1 ou 2, les deux caractéristiques de propulsion fixant chacune une dynamique d'entraînement qui décrit une modification dans le temps d'un couple et/ou d'une vitesse du moteur électrique (16) lors du passage d'un point de fonctionnement actuel à un point de fonctionnement nouveau, **caractérisé en ce que** le dispositif de commande (30) fait fonctionner le moteur électrique (16) exclusivement avec une dynamique d'entraînement imposée par la caractéristique de propulsion théorique.

4. Dispositif de propulsion (10) pour un avion, comprenant
- un élément générateur de poussée (12) pour générer une force de poussée,
- un moteur électrique (16) pour l'entraînement rotatif de l'élément générateur de poussée (12),
- un dispositif de commande (30) pour régler un point de fonctionnement du moteur électrique (16) et
- un dispositif d'actionnement pour la sélection d'un point de fonctionnement par un pilote,
**caractérisé en ce que** le dispositif de commande (30) est conçu pour reproduire sur la base d'une caractéristique de propulsion réelle (34) du moteur électrique (16) une caractéristique de propulsion théorique prédéfinie (38,50) et régler à cet effet, lors d'un actionnement du dispositif de manoeuvre de l'avion, un point de fonctionnement du moteur électrique (16) exclusivement selon la caractéristique de propulsion théorique (38, 50), une pluralité de caractéristiques de propulsion théoriques (38,50) étant stockée dans le dispositif de commande (30) et le dispositif de commande (30) étant conçu pour commuter entre les caractéristiques de propulsion théoriques (38, 50) en fonction d'un actionnement d'un dispositif de sélection (32) du dispositif de commande (30).

5. Dispositif de propulsion (10) selon la revendication 4, **caractérisé en ce que** la caractéristique de propulsion théorique comprend un champ caractéristique vitesse-couple (38, 50) stocké dans le dispositif de commande (30) et **en ce que** le dispositif de commande (30) est conçu pour sélectionner un point de fonctionnement dans le champ caractéristique vitesse-couple (38, 50) et régler celui-ci en fonction d'une position du dispositif de manoeuvre.

6. Dispositif de propulsion (10) selon la revendication 4 ou 5, **caractérisé en ce que** la caractéristique de propulsion théorique comprend des données sur une dynamique d'entraînement stockée dans le dispositif de commande (30) et **en ce que** le dispositif de commande (30) est conçu pour modifier dans le temps, lors d'un actionnement du dispositif de manoeuvre, un couple et/ou une vitesse du moteur électrique (16) en fonction des données.

7. Dispositif de propulsion (10) selon l'une des revendications 4 à 6, **caractérisé en ce que** la caractéristique de propulsion théorique comprend un champ caractéristique couple-vitesse (38, 50) d'un type de moteur prédéterminé.

8. Dispositif de propulsion selon la revendication 7, le type de moteur prédéterminé étant celui d'un moteur à combustion interne.

9. Dispositif de propulsion (10) selon l'une des revendications 4 à 8, **caractérisé en ce que** l'élément générateur de poussée (12) comprend une hélice, un turboréacteur ou un turbopropulseur.

10. Dispositif de propulsion (10) selon l'une des revendications 4 à 9, **caractérisé en ce que** le dispositif de manoeuvre comprend une manette de poussée.

11. Dispositif de propulsion (10) selon l'une des revendications 4 à 10, **caractérisé en ce que** le moteur électrique (16) fait partie d'un dispositif de propulsion hybride série (10).

12. Dispositif de propulsion selon l'une des revendications 4 à 10, **caractérisé en ce que** le moteur électrique fait partie d'un dispositif de propulsion hybride parallèle.

13. Avion doté d'un dispositif de propulsion (10) selon l'une des revendications 4 à 12.
